# EUROPEAN PATENT APPLICATION

(11) **EP 4 495 057 A2**
(43) Date of publication of application: **22.01.2025**
(21) Application number: 24187549.1
(22) Date of filing: 09.07.2024
(51) Int. Cl.: C01B 3/04

(54) **SYSTEM FOR DECOMPOSING AMMONIA AND METHOD OF DECOMPOSING AMMONIA**

(30) Priority: 21.07.2023 KR 20230095561
(71) Applicant: SK Innovation Co., Ltd., Seoul 03188 (KR)
(72) Inventor: PARK, Chan Saem, 34124 Daejeon (KR); KIM, Jae Jeong, 34124 Daejeon (KR); BAE, Sun Hyuk, 34124 Daejeon (KR)
(74) Representative: Prüfer & Partner mbB Patentanwälte · Rechtsanwälte

(57) **Abstract**

A system (10) for decomposing ammonia includes a cracker (100) confired to decompose ammonia to generate hydrogen, a heater (400) configured to heat the cracker, a fuel cell (200) configured to reacte hydrogen to supply a power in a battery, a bypass line (300) connecting a pipe that connects the cracker (100) and the fuel cell (200) with a pipe connecting the fuel cell (200) and the heater (400), a sensor (600) configured to sense an internal temperature of the cracker (100), and a controller (110) configured to receive an internal temperature information of the cracker (100) from the sensor (600). The controller (110) is configured to receive a residual ammonia information in the cracker (100), and to control an operation of the bypass line (300) based on at least one of the internal temperature information and the residual ammonia information.

## Description

### TECHNICAL FIELD

The embodiments of the present disclosure relate generally to a system for decomposing ammonia and a method of decomposing ammonia.

### BACKGROUND

Load fluctuations may frequently occur in a mobility environment such as a ship or a dump truck. Accordingly, when a feedback logic of an ammonia decomposition reaction in a plant environment such as a chemical plant is directly applied to the mobility environment, an ammonia decomposition ratio may be lowered.

Particularly, the ammonia decomposition reaction in a plant-scale environment may not be easily controlled in a load follow operation state such as a rapid acceleration or deceleration, for example, in a ship or a dump truck. Accordingly, a decrease in a power of an entire system or a decrease in a battery performance may be caused.

A process of decomposing ammonia to produce hydrogen is an endothermic reaction that requires a lot of heat. In the load follow operation, for example, in an environment of a ship or a dump truck, an endothermic reaction may occur at a relatively low temperature when a large amount of ammonia is introduced and an inner temperature of a cracker is rapidly lowered. Accordingly, a hydrogen conversion ratio is lowered and an amount of a residual ammonia may be increased due to an incomplete reaction.

### SUMMARY

According to an embodiment of the present disclosure, there is provided a system for decomposing ammonia having improved decomposition efficiency.

According to another embodiment of the present disclosure, there is provided a method of decomposing ammonia having improved decomposition efficiency.

According to yet another embodiment of the present disclosure an eco-friendly system capable of producing clean energy is provided which utilizes an ammonia decomposition system and an ammonia decomposition method according to embodiments of the present disclosure.

A system for decomposing ammonia includes a cracker adapted to decompose ammonia to generate hydrogen, a heater configured to heat the cracker, a fuel cell configured to react at least portion of the hydrogen generated by the cracker to generate power, a bypass line connecting a pipe that connects the cracker and the fuel cell with a pipe connecting the fuel cell and the heater, a sensor configured to sense an internal temperature of the cracker, and a controller configured to receive the internal temperature of the cracker transmitted from the sensor. The controller is configured to also receive a residual ammonia information in the cracker, and to control an operation of the bypass line based on at least one of the internal temperature information and the residual ammonia information.

In some embodiments, the bypass line may include a hydrogen supply pipe, and a bypass valve for controlling a hydrogen flow rate in the hydrogen supply pipe. The controller is configured to control an operation of the bypass line by opening the bypass valve when the internal temperature of the cracker is less than a preset temperature.

In some embodiments, the system may further include an absorber for absorbing a residual ammonia discharged from the cracker. The absorber may be located between a discharge pipe of the cracker and an absorption pipe of the fuel cell, the discharge pipe of the cracker is provided as an absorption pipe of the absorber, and the absorption pipe of the fuel cell is provided as a discharge pipe of the absorber. The bypass line may be configured to connect the discharge pipe of the cracker or the absorption pipe of the absorber with a discharge pipe of the fuel cell, or to connect the discharge pipe of the absorber or the absorption pipe of the fuel cell with the discharge pipe of the fuel cell.

In some embodiments, the controller may be configured to control an operation of the bypass line by opening the bypass valve when the residual ammonia in the cracker is equal to or greater than a preset amount.

In some embodiments, the system may further include a separator that is adapted to transmit hydrogen and nitrogen from hydrogen, nitrogen and the residual ammonia discharged from the discharge pipe of the cracker.

In some embodiments, the system may further include a first valve for controlling a flow rate of ammonia introduced from an absorption pipe of the cracker, and a second valve for controlling a flow rate of hydrogen, nitrogen and the residual ammonia discharged from the discharge pipe of the cracker.

In some embodiments, the controller may be configured to control a pressure and a temperature increase in the cracker by closing at least one of the first valve and the second valve when the residual ammonia in the cracker is greater than a preset amount.

In some embodiments, the system may further include a pressing element suitable for adjusting an internal pressure of the cracker.

In some embodiments, the controller may be configured to increase the internal pressure of the cracker by the pressing element when the residual ammonia in the cracker is equal to or greater than a preset amount.

In a method of decomposing ammonia, an internal temperature information of a cracker for decomposing ammonia to generate hydrogen is received from a sensor for sensing an internal temperature of the cracker. A residual ammonia information in the cracker is received. An operation of a bypass line is controlled based on at least one of the temperature information and the residual ammonia information. The bypass line connects a pipe that connects the cracker and a fuel cell with a pipe connecting the fuel cell and a heater.

A system for decomposing ammonia includes a cracker adapted to decompose an ammonia feed to generate a decomposition product comprising hydrogen, nitrogen, and residual ammonia and feeding the decomposition product to an absorber; the absorber configured to absorb the residual ammonia from the decomposition product and feeding the remaining mixture of hydrogen, and nitrogen to a fuel cell, the fuel cell configured to react at least a portion of the hydrogen received from the absorber to generate power; a bypass line connecting a pipe that connects the cracker and the fuel cell with a pipe connecting the fuel cell and the heater; a sensor configured to sense an internal temperature of the cracker and transmitting the internal temperature to a controller; and the controller configured to receive the internal temperature of the cracker from the sensor, and controlling an operation of the bypass line based on the internal temperature received from the sensor.

According to the above-described embodiments of the present disclosure, an ammonia decomposition system includes a bypass line between a cracker and an absorber or between the absorber and a fuel cell, and an operation of the bypass line may be controlled based on a temperature in the cracker and an amount of a residual ammonia.

In some embodiments, the ammonia decomposition system may promote an ammonia decomposition reaction in the cracker by using a valve in the bypass line, a valve in an absorption or discharge pipe of the cracker, a separator adjacent to the discharge pipe of the cracker, etc.

The effects of the present disclosure are not limited to those mentioned above, and other effects that are not specifically mentioned will be clearly understood by those skilled in the art from the following descriptions.

### BRIEF DESCRIPTION OF THE DRAWINGS

FIG. 1 is a block diagram of a system for decomposing ammonia in accordance with embodiments of the present disclosure.
FIG. 2 is a schematic block diagram illustrating components of a system for decomposing ammonia in accordance with embodiments of the present disclosure.
FIG. 3 is a simplified flowchart of a method of decomposing ammonia using a bypass line in a load follow state in accordance with embodiments of the present disclosure.
FIG. 4 is a schematic flowchart of a method of decomposing ammonia using a bypass line in a load follow state in accordance with embodiments of the present disclosure.
FIGS. 5A and 5B are schematic block diagrams illustrating a positional modification of a bypass line in accordance with embodiments of the present disclosure.
FIG. 6 is a block diagram of a system for decomposing ammonia including a separator in accordance with embodiments of the present disclosure.
FIG. 7 is a block diagram of a system for decomposing ammonia capable of opening and closing a valve in accordance with embodiments of the present disclosure.

### DETAILED DESCRIPTION OF THE EMBODIMENTS

Throughout the present disclosure, the same reference numerals refer to the same elements. The present disclosure does not describe all elements of the embodiments, and general contents in the technical field to which the present disclosure pertains or repeated contents between embodiments can be omitted. The term "part, module, member, block, etc." used herein may be implemented by a software or a hardware, and according to embodiments, a plurality of the "'part, module, member, block, etc." may be implemented as a single element, or a single "part, module, member, block, etc." may include a plurality of elements.

Throughout the specification, when a portion is recited as being "connected" to another portion, the recitation includes a direct connection, and an indirect connection, and an indirect connection may include a wireless communication network.

When an element is recited to "include" another element, the elements may include other elements, rather than excluding other elements, unless otherwise described.

Throughout the specification, when a member is recited to be positioned "on" another member, the recitation includes a case where a member is in contact with another member, and a case where another member is present between the two members.

Terms such as "a first, a second, etc." are used to distinguish one element from another element, and the elements are not limited by the terms.

As used herein, the singular forms "a," "an" and "the" are intended to include the plural forms as well, unless the context clearly indicates otherwise.

A reference numeral designating each step code is used for convenience of descriptions, and is not intended to limit the order of each step, and each step may be performed differently from the specified order unless a specific order is clearly described herein.

Hereinafter, operation mechanisms and embodiments of the present disclosure will be described with reference to the accompanying drawings.

In the present specification, "the device (or an apparatus) according to the present disclosure" includes all various devices capable of performing arithmetic processing and providing a result to a user. For example, the device according to the present disclosure may include all of a computer, a server device and a portable terminal, or may include any one of the forms.

Here, the computer may include, e.g., a notebook computer, a desktop, a laptop computer, a tablet PC, a slate PC, etc., equipped with a web browser.

The server device is a server that processes information by communicating with an external device, and may include an application server, a computing server, a database server, a file server, a game server, a mail server, a proxy server, a web server, etc.

For example, the portable terminal may be a wireless communication device having portability and mobility. The portable terminal may include all types of handheld-based wireless communication devices such as a personal communication system (PCS), a global system for mobile communications (GSM), a personal digital cell (PDC), a personal handy phone system (PHS), a personal digital assistant (PDA), an International Mobile Telecommunication (IMT)-2000, Code Division Multiple Access (CDMA)-2000, W-CDMA (W-Code Division Multiple Access), a wireless broadband Internet (WiBro) terminal, a smartphone, etc., and may include wearable devices such as a watch, a ring, a bracelet, an anklet, a necklace, glasses, contact lenses, or a head-mounted-device (HMD).

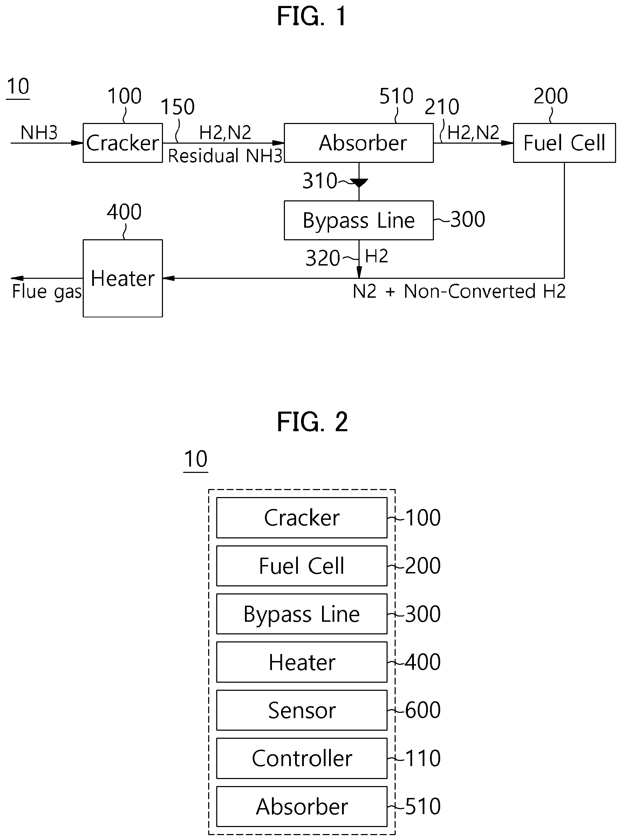

FIG. 1 is a block diagram of a system for decomposing ammonia in accordance with embodiments of the present disclosure. FIG. 2 is a schematic block diagram illustrating components of a system for decomposing ammonia in accordance with embodiments of the present disclosure. In some embodiments, a system for decomposing ammonia (hereinafter, that may be referred to as an ammonia decomposition system) may be implemented as a bypass ammonia decomposition system.

Referring to FIGS. 1 and 2, an ammonia decomposition system 10 includes a cracker 100, a fuel cell 200, a bypass line 300, a heater 400, an absorber 510 and a sensor 600. Each component/node may exchange data with or from another component/node. Each node may be connected through a network.

The ammonia decomposition system 10 may receive and decompose ammonia (NH₃) through the cracker 100. When an internal temperature of the cracker 100 is temporarily lowered, the ammonia decomposition ratio may be lowered due to a catalyst deactivation or a performance degradation in the cracker 100. Accordingly, an amount of a residual ammonia in the cracker 100 may be relatively increased to result in the reduction of the ammonia decomposition ratio again.

The cracker 100 may receive ammonia to produce hydrogen (H₂), nitrogen (N₂), and ammonia (NH₃) as a decomposition product. The decomposition product (H₂, N₂, and residual NH₃) from the cracker 100 is fed to an absorber 510. The absorber 510 absorbs residual ammonia while the hydrogen and nitrogen are fed to the fuel cell. In some embodiments, a reaction in which ammonia is decomposed in the ammonia decomposition system 10 is an endothermic reaction. Accordingly, as the ammonia decomposition reaction occurs, a temperature in the ammonia decomposition system 10 may be lowered. In this case, an incomplete decomposition of ammonia may be increased and the amount of the residual ammonia may also be increased. The ammonia decomposition system 10 according to embodiments of the present disclosure may reduce the amount of the residual ammonia by continuously promoting the ammonia decomposition reaction.

The fuel cell 200 according to some embodiments may supply nitrogen, and non-converted hydrogen, etc., to the heater 400 before being supplied back to the cracker 100 again. Accordingly, a temperature of the non-converted hydrogen which is relatively higher than the internal temperature of the cracker 100 may induce a temperature increasing effect of the cracker 100. As described above, the ammonia decomposition system 10 may provide the temperature increasing effect by supplementing a temperature decrease due to an imbalance of materials supplied into the cracker 100 and the endothermic reaction.

A flue gas may be discharged from the heater 400 after the above-described reaction.

The ammonia decomposition system 10 may include the cracker 100, a controller 110, the fuel cell 200, the bypass line 300, the heater 400, the absorber 510 and the sensor 600. It is noted, however, that the number of and type of elements that may be included in the ammonia decomposition system 10 is not limited thereto. The ammonia decomposition system 10 of the present disclosure may include a processing server or a cloud server substantially capable of performing the function of the controller 110 instead of the controller 110. The cracker 100 of the ammonia decomposition system 10 may include a reactor.

The cracker 100 may include the sensor 600 configured to sense the internal temperature of the cracker 100. The controller 110 may receive an information on the internal temperature of the cracker 100 from the sensor 600. In some embodiments, the sensor 600 may sense the amount of the residual ammonia in the cracker. The controller 110 may receive a residual ammonia amount information in the cracker 100 from the sensor 600. The sensor 600 includes a sensor capable of sensing various types of information (e.g., the internal temperature of the cracker, the amount of the residual ammonia in the cracker, etc.). The controller 110 may receive the information sensed by the sensor 600. The sensor, therefore, may be multiple sensors such as, for example, a temperature sensor for sensing an internal temperature of the cracker 100, and a residual ammonia detector for sensing the amount of residual ammonia in the cracker 100. The positioning of the sensor 600 may vary depending on the type of the sensor. For example, the residual ammonia detector may be positioned at or near an outlet of the cracker 100 leading to a pipe connecting the outlet of the cracker 100 with the absorber 510. Also, multiple sensors of the same type may be employed as may be needed. For example, an internal temperature of the cracker 100 may be measured at more than one location within the cracker reactor 100. The cracker reactor 100 may be of any suitable reactor type, such as, for example, a fixed bed type reactor, a fluidized bed type reactor, or a membrane type reactor.

In some embodiments, the controller 110 may control an operation of the bypass line 300 based on at least one of the temperature information and the residual ammonia information.

In an embodiment, the controller 110 may control an operation of the bypass line 300 such that a bypass valve 310 may be opened when the internal temperature of the cracker 100 is less than a preset temperature. In an embodiment, the controller 110 may control an operation of the bypass line 300 such that the bypass valve 310 may be opened when the residual ammonia in the cracker is greater than or equal to a preset amount. Hence, when the internal temperature of the cracker 100 is less than a preset temperature and/or the residual ammonia in the cracker 100 is greater than or equal to a preset value the bypass line 300 may be opened directing a flow from the absorber 510 with excess ammonia first to the heater 400 and then back to the cracker 100.

In some embodiments, the bypass line 300 may include a hydrogen supply pipe 320 and the bypass valve 310. The hydrogen supply pipe 320 may supply hydrogen which is a product of the decomposition reaction of ammonia in the cracker 100. For example, the bypass valve 310 may adjust a hydrogen flow rate of the hydrogen supply pipe.

In an embodiment, opening the valve may be an operation of entirely opening the valve. In an embodiment, opening the valve may be an operation of partially opening the valve. In an embodiment, when the bypass valve 310 is opened, the flow to the fuel cell 200 may be blocked.

In some embodiments, opening the valve may be adjusted in a range between a completely closed state and an entirely open state of the valve by the operation of opening the valve.

The heater 400 may be disposed to be adjacent to the cracker 100 to heat the cracker 100. The heater 400 may heat the cracker 100. The heater 400 may heat hydrogen and/or ammonia to be supplied into the cracker 100.

The heater 400 may be any suitable type and configuration and may generate flue gas as a byproduct the composition of which may vary depending on the type of the heater and/or the fuel used. For example, the heater 400 may pass through from outside the cracker 100 to an inside of the cracker 100, or may extend inside of the cracker 100, or may surround an outside of the cracker 100, or may be adjacent to the cracker 100 to transfer a heat. Accordingly, the heater 400 may ramp the inside of the cracker 100 to additionally induce an endothermic (decomposition) reaction of ammonia in the cracker 100.

The heater 400 may include at least one pipe. The heater 400 may include multiple pipes. The controller 110 may control the operation of the bypass line 300 based on the temperature information to heat the cracker 100 through at least one pipe.

The absorber 510 may absorb the residual ammonia discharged from the cracker 100. For example, the absorber 510 may be located between a discharge pipe 150 of the cracker 100 and an absorption (inlet) pipe 210 of the fuel cell 200.

In an embodiment, the absorber 510 may use the discharge pipe 150 of the cracker 100 as an absorption pipe of the absorber 510, and may use the absorption pipe 210 of the fuel cell 200 as a discharge pipe of the absorber 510.

A storage device (not illustrated) may store data supporting various functions of the ammonia decomposition system 10 and a program for the operation of the controller 110. The storage device may store input/output data (e.g., an image, a video, etc.). The storage device may store an application program or an application driven in the ammonia decomposition system 10, and data and instructions for the operation of the ammonia decomposition system 10. At least one of the application programs may be downloaded from an external server through a wireless communication.

The storage device may include at least one type of storage media selected from a network attached storage (NAS), a flash memory type, a hard disk type, a solid state disk (SSD) type, a silicon disk drive (SSD) type, a multimedia card micro type, a card type memory (e.g., an SD or XD memory, etc.), a random access memory (RAM), a static random access memory (SRAM), a read-only memory (ROM), an electrically erasable programmable read-only memory (EEPROM), a programmable read-only memory (PROM), a magnetic memory, a magnetic disk and an optical disk. The storage device may include a database separated from the ammonia decomposition system 10, but which is wire-connected or wireless-connected with the ammonia decomposition system 10.

The ammonia decomposition system 10 may further include an output element (not illustrated). The output element may generate an output related to a visual sense, a hearing sense, or a touch sense, and may include a display device.

The display device may form a mutual-layered structure with a touch sensor or may be provided as an integral structure with the touch sensor to implement a touch screen. The touch screen may be provided as a user input element that provides an input interface between the ammonia decomposition system 10 and the user, and may provide an output interface between the ammonia decomposition system 10 and the user.

The display device (not illustrated) displays (outputs) information processed in the ammonia decomposition system 10. For example, the display device may display an execution screen information of the application program (e.g., the application) driven in the ammonia decomposition system 10, or information of a user interface (UI) or graphic user interface (GUI) information according to the execution screen information.

At least one of described elements may be added or deleted corresponding to the performance of the elements shown in FIG. 2. Further, it may be easily understood by those of ordinarily skilled in the art that mutual positions of the elements may be changed corresponding to the performance or the structure of the ammonia decomposition system 10. Other elements which are well known in the art may also be included without changing the scope of the present disclosure.

Each element shown in FIG. 2 may be implemented with a software and/or a hardware such as a field programmable gate array (FPGA) and an application specific integrated circuit (ASIC).

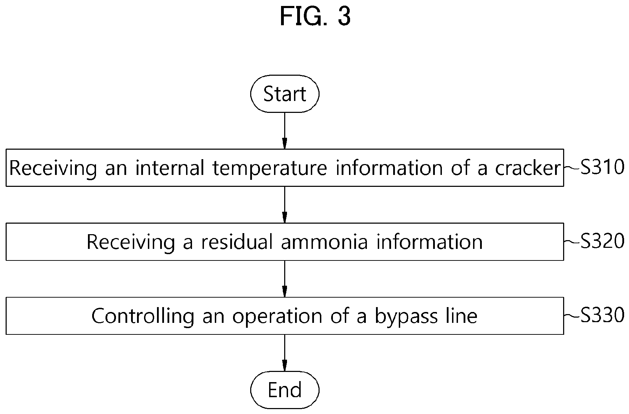

FIG. 3 is a simplified flowchart of a method of decomposing ammonia using a bypass line in a load follow state in accordance with embodiments of the present disclosure.

Referring to FIG. 3, in an operation of S310, a controller (e.g., the controller 110 of FIG. 2) may receive an internal temperature information of a cracker (e.g., the cracker 100 of FIG. 1). For example, the controller 110 may receive various information generated by a sensor (e.g., the sensor 600 of FIG. 2) included in the cracker 100 to sense various information at the inside of the cracker 100. The information received by the controller 110 may include the internal temperature information of the cracker 100.

In an operation of S320, the controller 110 may receive the residual ammonia information in the cracker 100. The residual ammonia information may include an information on an amount of the residual ammonia remaining as a product after the ammonia reaction in the cracker 100. The information received by the controller 110 may include the information on the amount of the residual ammonia in the cracker 100.

At least a portion of the residual ammonia may be discharged from the cracker 100 through a discharge pipe of the cracker 100, and may be introduced into an absorption pipe of the absorber (e.g., designated as 510 in FIGS. 1 and 2).

In an operation of S330, the controller 110 may control an operation of the bypass line (e.g., bypass line 300 of FIG. 1). The controller 110 controls the operation of the bypass line based on at least one of the temperature information and the information on the amount of the residual ammonia in the cracker 100.

In some embodiments, the controller 110 may control the operation of the bypass line 300 to improve an efficiency of the ammonia decomposition reaction in the cracker 100. In some embodiments, the controller 110 may control the operation of the bypass line 300 to increase the internal temperature of the cracker 100. In some embodiments, the controller 110 may control the operation of the bypass line 300 to reduce the amount of the residual ammonia at the inside of the cracker 100.

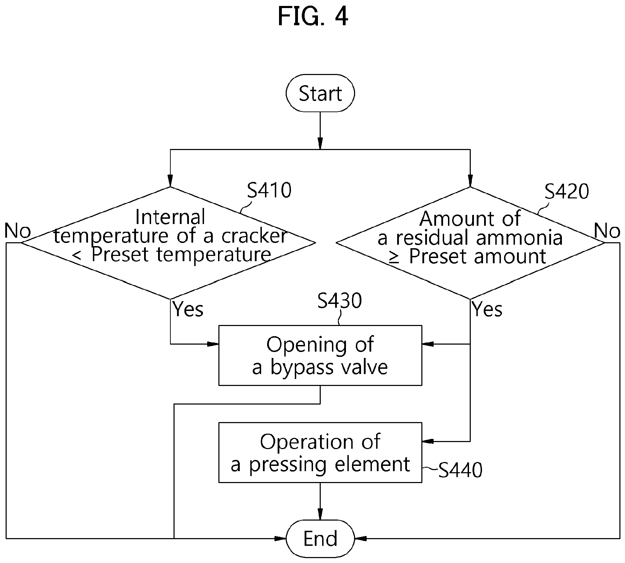

FIG. 4 is a schematic flowchart of a method of decomposing ammonia using a bypass line in a load follow state in accordance with embodiments of the present disclosure.

Referring to FIG. 4, in an operation of S410, the controller (e.g., the controller 110 of FIG. 2) may compare the internal temperature of the cracker (e.g., the cracker 100 of FIG. 1) with a preset temperature. For example, the controller 110 may check whether the internal temperature of the cracker 100 is less than or equal to the preset temperature. The preset temperature may be stored in the storage device. In some embodiments, the preset temperature may correspond to a critical temperature at which the ammonia decomposition reaction in the cracker 100 may occur.

In an operation of S420, the controller 110 may compare the amount of the residual ammonia in the cracker 100 with a preset amount. For example, the controller 110 may check whether the amount of the residual ammonia in the cracker is equal to or greater than the preset amount. The preset amount may be stored in the storage device. In some embodiments, the preset amount may correspond to a critical amount of the residual ammonia at which the ammonia decomposition reaction in the cracker 100 may be inhibited.

The critical amount of the residual ammonia may be an amount at which the ammonia decomposition reaction in the cracker 100 is inhibited when the residual ammonia in the cracker 100 is utilized again as ammonia which is a reactant.

That is, even when the residual ammonia is recycled as the reactant, the critical amount of the residual ammonia may be determined by a ratio of a product to a reactant when an ammonia decomposition productivity in the cracker 100 is converted from a positive (+) state to a negative (-) state.

In an operation of S430, the controller 110 may control an operation of the bypass line (e.g., the bypass line 300 of FIG. 2) to open a bypass valve.

In an embodiment, when the internal temperature of the cracker 100 is less than the preset temperature in the operation of S410, the controller 110 controls the operation of the bypass line 300 to open the bypass valve. The controller 110 may control a degree of opening of the bypass valve stepwise according to a difference between the preset temperature and the internal temperature of the cracker 100.

In an embodiment, when the residual ammonia is greater than or equal to a preset amount in the operation of S420, the controller 110 controls the operation of the bypass line 300 to open the bypass valve. The controller 110 may control the degree of opening of the bypass valve stepwise according to a difference between the preset amount and the amount of the residual ammonia.

As described above, the controller 110 may control the degree of opening of the bypass valve in proportion to a degree of difference of the temperature or the amount.

In an operation of S440, the controller 110 may control an operation of a pressing element. The pressing element may be a device that controls an internal pressure of the cracker 100 by applying a pressure to the cracker 100. The internal temperature of the cracker 100 may be increased by the pressing element.

In an operation of S420, when the residual ammonia is greater than or equal to the preset amount, the controller 110 may control the operation of the pressing element to increase the pressure in the cracker 100 instead of opening the bypass valve. As the pressure is applied to the cracker 100 by the pressing element, the inside of the cracker 100 may be heated. Accordingly, the ammonia decomposition reaction at the inside of the cracker 100 may be promoted to reduce the amount of the residual ammonia in the cracker 100.

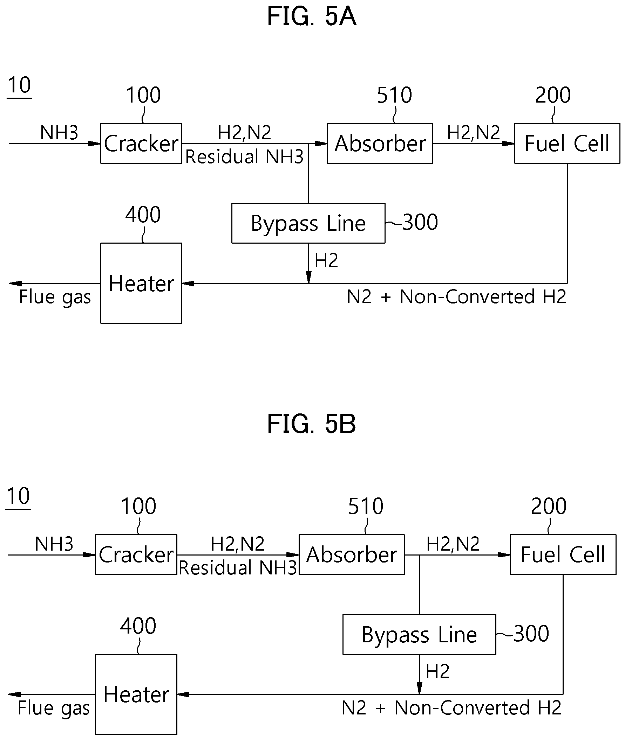

FIGS. 5A and 5B are schematic block diagrams illustrating a positional modification of a bypass line in accordance with embodiments of the present disclosure. In FIGS. 5A, 5B, 6 and 7, the designation of the discharge pipe 150, the absorption pipe 210, the hydrogen supply pipe 320 and the bypass valve 310 in FIG. 1 are omitted for convenience of illustration.

Referring to FIGS. 5A and 5B, a connected location of the bypass line 300 may be appropriately changed. The ammonia decomposition system 10 may include the bypass line 300 to interact with an operation before a portion of the residual ammonia is introduced into the absorber 510, or an operation after the residual ammonia is absorbed by the absorber 510 and only hydrogen and nitrogen are discharged.

The bypass line 300 may connect a pipe connecting the cracker 100 and the fuel cell 200, and a pipe connecting the fuel cell 200 and the heater 400 to each other. Accordingly, the controller 110 may supply hydrogen having a relatively high temperature from a hydrogen supply pipe of the bypass line 300 to the heater 400.

As illustrated in FIG. 5A, the bypass line 300 may be located between a discharge pipe of the cracker 100 and an absorption pipe of the fuel cell 200. In this case, the ammonia decomposition system 10 may use the discharge pipe of the cracker 100 as an absorption pipe of the absorber 510, and use the absorption pipe of the fuel cell 200 as a discharge pipe of the absorber 510. The bypass line 300 may connect the discharge pipe of the cracker 100 or the absorption pipe of the absorber 510, and the discharge pipe of the fuel cell 200.

As illustrated in FIG. 5B, the bypass line 300 may be located between the discharge pipe of the absorber 510 and the absorption pipe of the fuel cell 200. In this case, the bypass line 300 may connect the discharge pipe of the absorber 510 or the absorption pipe of the fuel cell 200, and the discharge pipe of the fuel cell 200.

The ammonia decomposition system 10 may control the operation of the bypass line 300 so that hydrogen in the product may bypass without passing through the fuel cell 200. The ammonia decomposition system 10 may have a structure capable of utilizing a residual heat of a battery. The battery may be, for example, a battery powered by the electricity generated by the fuel cell 200.

In the ammonia decomposition system 10 according to some embodiments, a battery may be adjacent to the heater 400. Accordingly, the ammonia decomposition system 10 may rapidly increase the internal temperature of the cracker 100.

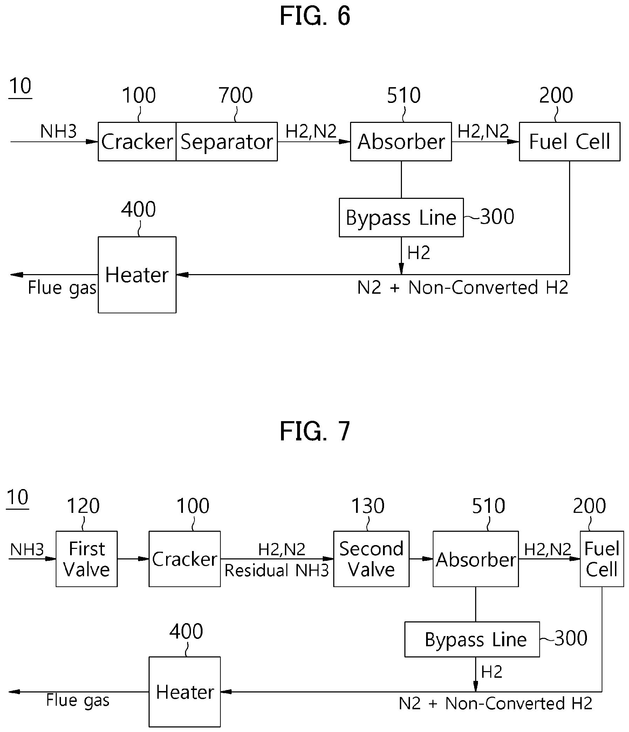

FIG. 6 is a block diagram of a system for decomposing ammonia including a separator in accordance with embodiments of the present disclosure.

Referring to FIG. 6, the ammonia decomposition system 10 may include a separator 700 adjacent to the cracker 100 or coupled to the discharge pipe of the cracker 100. The separator 700 may permeate hydrogen and nitrogen among hydrogen, nitrogen and the residual ammonia discharged from the discharge pipe of the cracker 100. The separator 700 may inhibit the residual ammonia from flowing into an absorption pipe of absorber 510.

The separator 700 may include a material that may not permeate or transmit ammonia particles in one direction. For example, the separator 700 may have a structure including a membrane filter. Thus, the ammonia decomposition system 10 may suppress discharge of the residual ammonia to an outside of the separator 700.

In an embodiment, the separator 700 may block permeation of ammonia particles by an electrical reaction. The ammonia decomposition system 10 may control an operation of the separator 700 based on the residual ammonia information. For example, if the residual ammonia is detected in the discharge pipe of the cracker 100, the controller 110 may control to block the residual ammonia from flowing through the separator 700 to the abosorber 510 or the bypass line 300.

FIG. 7 is a block diagram of a system for decomposing ammonia capable of opening and closing a valve in accordance with embodiments of the present disclosure.

Referring to FIG. 7, the ammonia decomposition system 10 may include valves 120 and 130 (e.g., a first valve 120 and a second valve 130) adjacent to the cracker 100 or coupled to the absorption pipe and the discharge pipe of the cracker 100.

The first valve 120 may adjust a flow rate of ammonia introduced from the absorption pipe of the cracker 100. The second valve 130 may adjust flow rates of hydrogen, nitrogen and the residual ammonia discharged from the discharge pipe of the cracker 100. The controller 110 may control an operation of at least one of the first valve 120 and the second valve 130 to control an internal pressure of the cracker 100 and a heating temperature.

In some embodiments, if the residual ammonia in the cracker 100 is greater than or equal to a preset amount, the controller 110 may close at least one of the first valve 120 and the second valve 130. When the first valve 120 is closed, reaction pressure and temperature in the cracker 100 may be rapidly adjusted. Additionally, when the second valve 130 is closed, the reaction pressure and temperature in the cracker 100 may be rapidly adjusted.

As described above, the controller 110 may form an environment capable of promoting an internal reaction of the cracker 100 by combining a closed state or an open state of the first valve 120 and the second valve 130.

In some embodiments, the ammonia decomposition system 10 may control the close/open and closed/opened degree of each valve 120 and 130 by including the first valve 120 and the second valve 130 in the absorption pipe and discharge pipe of the cracker 100.

The disclosed embodiments may be implemented in the form of a recording medium storing instructions executable by a computer. The instructions may be stored in the form of a program code, and a program module may be generated by a processor to perform operations of the disclosed embodiments. The recording medium may be implemented in a computer-readable form.

The computer-readable recording medium includes all types of recording media in which instructions that may be read by a computer are stored. For example, the recording medium may include a read only memory (ROM), a random access memory (RAM), a magnetic tape, a magnetic disk, a flash memory, an optical data storage device, etc.

## Claims

1. A system (10) for decomposing ammonia comprising:
a cracker adapted to decompose ammonia to generate hydrogen;
a heater (400) configured to heat the cracker (100);
a fuel cell (200) configured to react at least a portion of the hydrogen generated by the cracker (100) to generate power;
a bypass line (300) connecting a pipe (210) that connects the cracker (100) and the fuel cell (200) with a pipe (210) connecting the fuel cell (200) and the heater (400);
a sensor (600) configured to sense an internal temperature of the cracker (100); and
a controller (110) configured to receive the internal temperature of the cracker (100) transmitted from the sensor (600),
wherein the controller (110) is configured to also receive a residual ammonia information in the cracker (100), and to control an operation of the bypass line (300) based on at least one of the internal temperature information and the residual ammonia information.

2. The system (10) for decomposing ammonia of claim 1, wherein the bypass line (300) comprises a hydrogen supply pipe (320), and a bypass valve (310) for controlling a hydrogen flow rate in the hydrogen supply pipe (320),
wherein the controller (110) is configured to control an operation of the bypass line (300) by opening the bypass valve (310) when the internal temperature of the cracker (100) is less than a preset temperature.

3. The system (10) for decomposing ammonia of claim 1 or 2, further comprising an absorber (510) for absorbing a residual ammonia discharged from the cracker (100),
wherein the absorber (510) is located between a discharge pipe (150) of the cracker (100) and an absorption pipe (210) of the fuel cell (200), the discharge pipe (150) of the cracker (100) is provided as an absorption pipe (210) of the absorber (510), and the absorption pipe (210) of the fuel cell (200) is provided as a discharge pipe (150) of the absorber (510),
wherein the bypass line (300) is configured to connect the discharge pipe (150) of the cracker (100) or the absorption pipe (210) of the absorber (510) with a discharge pipe (150) of the fuel cell (200), or to connect the discharge pipe (150) of the absorber (510) or the absorption pipe (210) of the fuel cell (200) with the discharge pipe (150) of the fuel cell (200).

4. The system (10) for decomposing ammonia of claim 2 or 3, wherein the controller (110) is configured to control an operation of the bypass line (300) by opening the bypass valve (310) when the residual ammonia in the cracker (100) is greater than a preset amount.

5. The system (10) for decomposing ammonia of one of claims 1 to 4, further comprising a separator (700) that is configured to transmit hydrogen and nitrogen from hydrogen, nitrogen and the residual ammonia discharged from the discharge pipe (150) of the cracker (100).

6. The system (10) for decomposing ammonia of one of claims 3 to 5, further comprising:
a first valve (120) for controlling a flow rate of ammonia introduced from an absorption pipe (210) of the cracker (100); and
a second valve (130) for controlling a flow rate of hydrogen, nitrogen and the residual ammonia discharged from the discharge pipe (150) of the cracker (100).

7. The system (10) for decomposing ammonia of claim 6, wherein the controller (110) is configured to control a pressure and a temperature increase in the cracker (100) by closing at least one of the first valve (120) and the second valve (130) when the residual ammonia in the cracker (100) is equal to or greater than a preset amount.

8. The system (10) for decomposing ammonia of ome of claims 1 to 7, further comprising a pressing element suitable for adjusting an internal pressure of the cracker (100).

9. The system (10) for decomposing ammonia of claim 8, wherein the controller (110) is configured to increase the internal pressure of the cracker (100) by controlling an operation of the pressing element when the residual ammonia in the cracker (100) is equal to or greater than a preset amount.

10. A method of decomposing ammonia, the method comprising:
receiving an internal temperature information of a cracker (100) for decomposing ammonia to generate hydrogen from a sensor (600) for sensing an internal temperature of the cracker (100);
receiving a residual ammonia information in the cracker (100); and
controlling an operation of a bypass line (300) based on at least one of the temperature information and the residual ammonia information, the bypass line (300) connecting a pipe (210) that connects the cracker (100) and a fuel cell (200) with a pipe (210) connecting the fuel cell (200) and a heater (400).

11. A system (10) for decomposing ammonia, the system (10) comprising:
a cracker (100) adapted to decompose an ammonia feed to generate a decomposition product comprising hydrogen, nitrogen, and residual ammonia and feeding the decomposition product to an absorber (510);
the absorber (510) configured to absorb the residual ammonia from the decomposition product and feeding the remaining mixture of hydrogen, and nitrogen to a fuel cell (200);
the fuel cell (200) configured to react at least a portion of the hydrogen received from the absorber (510) to generate power;
a bypass line (300) connecting a pipe (210) that connects the cracker (100) and the fuel cell (200) with a pipe (210) connecting the fuel cell (200) and the heater (400);
a sensor (600) configured to sense an internal temperature of the cracker (100) and transmitting the internal temperature to a controller (110); and
the controller (110) configured to receive the internal temperature of the cracker (100) from the sensor (600), and controlling an operation of the bypass line (300) based on the internal temperature received from the sensor (600).
